Europäisches Patentamt

European Patent Office

Office européen des brevets

(11) Veröffentlichungsnummer: **0 317 834**
**A1**

## (12) EUROPÄISCHE PATENTANMELDUNG

(21) Anmeldenummer: **88118723.1**

(22) Anmeldetag: **10.11.88**

(51) Int. Cl.⁴: **F16H 13/08**

(30) Priorität: **27.11.87 DE 8715704 U**

(43) Veröffentlichungstag der Anmeldung:
**31.05.89 Patentblatt 89/22**

(84) Benannte Vertragsstaaten:
**DE ES FR GB IT NL SE**

(71) Anmelder: **Pfankuch Maschinen GmbH**
**Kurt-Fischer-Strasse 23 b**
**D-2070 Ahrensburg(DE)**

(72) Erfinder: **Pfankuch, Claus**
**Kurt-Firscher-Strasse 23 b**
**D-2070 Ahrensburg(DE)**

(74) Vertreter: **von Raffay, Vincenz, Dipl.-Ing.**
**Patentanwälte Raffay, Fleck & Partner**
**Postfach 32 32 17**
**D-2000 Hamburg 13(DE)**

(54) **Zahnradloses Axial-Umlaufgetriebe.**

(57) Das zahnradlose Axial-Umlaufgetriebe weist einen Läufer 5 und einen Rotor 9 auf. Diese beiden Teile sind in einem mit Traktionsflüssigkeit gefülltem, abgedichteten Gehäuse 1, 2 angeordnet. Der Läufer weist eine aus dem Gehäuse herausgeführte Antriebswelle 4 und der Rotor eine entsprechende Abtriebswelle 8 auf. In dem Rotor sind Wälzkörper 7 gelagert, deren Laufflächen sich an dem angrenzenden Gehäuseteil 2 abstützen und durch Federn 6 gegen den Läufer 5 gedrückt sind, wobei die Federn zwischen dem Läufer und dem an diesem angrenzenden Gehäuseteil 1 angeordnet sind. Hierdurch wird ein entsprechendes Umlaufgetriebe geschaffen, das geräuscharm läuft, einen Schutz gegen Überlastung bietet und einen geringen Raum beansprucht.

EP 0 317 834 A1

## Zahnradloses Axial-Umlaufgetriebe

Die Erfindung betrifft ein zahnradloses Axial-Umlaufgetriebe nach dem Oberbegriff des Patentanspruches 1.

Umlaufgetriebe sind in den unterschiedlichsten Ausgestaltungen bekannt. Häufig handelt es sich um sog. Planetengetriebe, die als Zahnradgetriebe ausgebildet sind.

Derartige Planetengetriebe neigen zu störender Geräuschentwicklung, sie haben, konstruktiv bedingt, keinen Überlastschutz und beanspruchen einen verhältnismäßig großen Raum.

Der Erfindung liegt die Aufgabe zugrunde, ein zahnradloses Axial-Umlaufgetriebe nach dem Oberbegriff des Patentanspruches 1 zu schaffen, das geräuscharm läuft, einen Schutz gegen Überlastung bietet und einen geringen Raum beansprucht.

Diese Aufgabe wird durch das Kennzeichen des Patentanspruches 1 gelöst.

Dadurch, daß Wälzkörper mit verhältnismäßig geringem Durchmesser vorgesehen sind, wird wenig Raum beansprucht, gleichzeitig ist - da kein Formschluß vorliegt - ein Überlastschutz gegeben. Die Geräuschentwicklung ist entsprechend gedämpft. Die Traktionsflüssigkeit sorgt ebenfalls für eine Dämpfung und unterstützt die Übertragung des Momentes.

Die Federn, die vorzugsweise Tellerfedern sind, können ausgewechselt werden, um so Einfluß auf die Größe des übertragbaren Momentes zu nehmen. Wenn dieses Moment überschritten wird, so bedeutet dieses, daß der Überlastschutz wirksam wird.

In den Ansprüchen 4 und 5 sind vorteilhafte Ausgestaltungen unter Schutz gestellt.

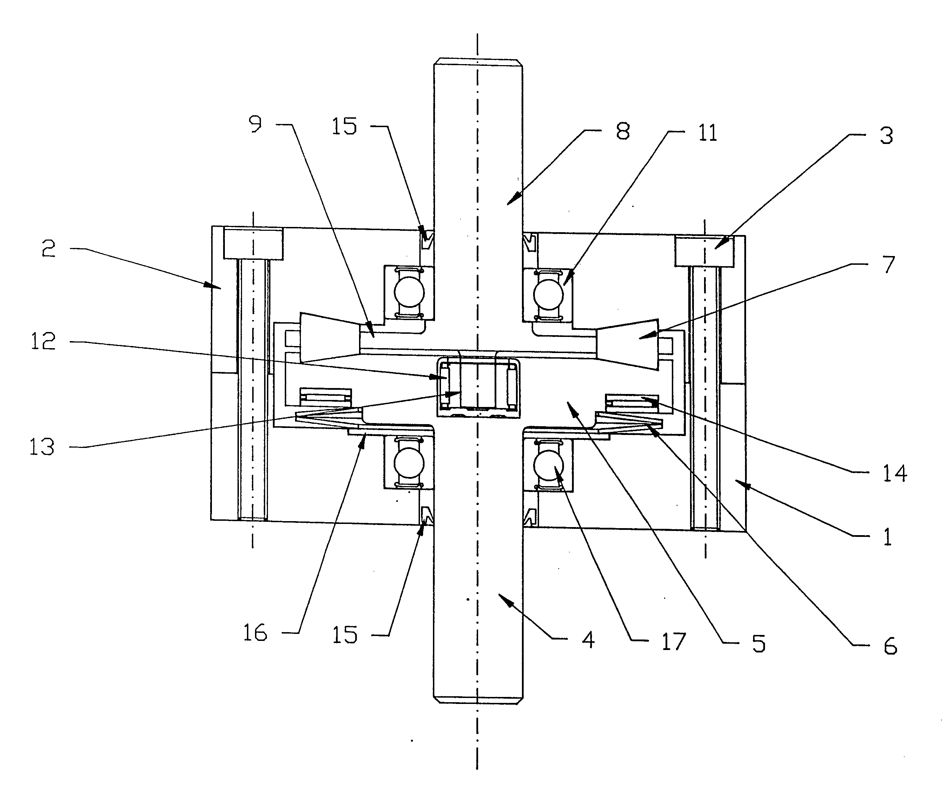

In der Zeichnung ist eine Ausführungsform eines zahnradlosen Axial-Umlaufgetriebes schematisch im Schnitt dargestellt. In den beiden Gehäusehälften 1 und 2, die durch Schrauben 3 zusammengehalten werden, sind der Läufer 5 und der Rotor 9 angeordnet. Aus dem Gehäuse heraus führt eine mit dem Läufer 5 verbundene Antriebswelle 4 und eine mit dem Rotor 9 verbundene Abtriebswelle 8.

Die Antriebswelle 4 ist in Kugellagern 17 gelagert. Der Läufer 5 wird durch Tellerfedern 6 vorgespannt, die sich an einem gehärteten Ring 16, an dem Gehäuseteil 1 und an Nadellagern 14 an dem Läufer 5 abstützen, um die Drehbewegung ungehindert zu ermöglichen.

Die Tellerfedern 6 drücken den Läufer 5 gegen die Wälzkörper 7, die in dem Rotor 9 gelagert und kegelförmig ausgebildet sind. Auf der dem Läufer 5 gegenüberliegenden Seite stützen sich die Wälzkörper an einem gehärteten Ring 10 ab, der praktisch Teil des Gehäuseteils 2 ist.

Die Abtriebswelle 8 ist in einem Kugellager 11 gelagert. Die Dichtungen für die beiden Wellen 4 und 8 sind mit 15 bezeichnet.

Ein Zapfen 13 des Rotors 9 ist mit Hilfe von Wälzlagern 12 in einem Hohlraum des Läufers 5 gelagert, um für einen ruhigen Lauf zu sorgen. Der Innenraum des durch die Gehäuseteile 1 und 2 gebildeten Gehäuses ist mit einer synthetischen Traktionsflüssigkeit gefüllt.

Im Betrieb wird das Drehmoment von dem Läufer 5 durch die Wälzkörper 7 auf den Rotor 9 übertragen. Das Übersetzungsverhältnis wird durch den Durchmesser der Wälzkörper 7 bestimmt und durch die Vorspannung der Tellerfedern 6, d.h. die von diesen ausgeübte Kraft, beeinflußt. Gleichzeitig ist bei Überlastung ein Schlupf zwischen Läufer 5 und Wälzkörper 7 möglich, da zwischen diesen beiden Teilen nur eine kraftschlüssige Verbindung, hervorgerufen durch die Tellerfedern 8, besteht.

## Ansprüche

1. Zahnradloses Axial-Umlaufgetriebe mit einem Läufer (5) und einem Rotor (9), die in einem mit Traktionsflüssigkeit gefüllten, abgedichteten Gehäuse (1,2) angeordnet sind, aus dem eine mit dem Läufer verbundene Antriebswelle (4) und eine mit dem Rotor verbundene Abtriebswelle (8) herausführt, dadurch gekennzeichnet, daß in dem Rotor Wälzkörper (7) gelagert sind, deren Laufflächen sich an dem angrenzenden Gehäuseteil (2) abstützen, und durch Federn (6) gegen den Läufer (5) gedrückt sind, wobei die Federn zwischen dem Läufer und dem an diesen angrenzenden Gehäuseteil (1) angeordnet sind.

2. Axial-Umlaufgetriebe nach Anspruch 1, dadurch gekennzeichnet, daß die Federn Tellerfedern (6) sind.

3. Axial-Umlaufgetriebe nach Anspruch 2, dadurch gekennzeichnet, daß die Tellerfedern (6) auswechselbar sind.

4. Axial-Umlaufgetriebe nach Anspruch 1, dadurch gekennzeichnet, daß die Laufflächen der Wälzkörper (7) an dem angrenzenden Gehäuseteil (2) auf einem gehärteten Ring (10) laufen, der fest mit diesem Gehäuseteil (2) verbunden ist.

5. Axial-Umlaufgetriebe nach einem oder mehreren der vorstehenden Ansprüche, dadurch gekennzeichnet, daß sich die Federn (6) an dem Läufer (5) auf Wälzlagern, vorzugsweise Nadellagern (14) abstützen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 383 107 (CHERRY) <br> * Seite 1, rechte Spalte, Zeilen 21-55; Seite 2, linke Spalte, Zeilen 1-59; Seite 3, rechte Spalte, Zeilen 67-75; Figur 8 * | 1,2,4 | F 16 H 13/08 |
| A | --- | 5 | |
| X | FR-A-1 408 308 (ATELIERS SAINT-URBAIN) <br> * Seiten 2-3; Figur 5 * | 1,2,5 | |
| A | ----- | 4 | |

**RECHERCHIERTE SACHGEBIETE (Int. Cl.4)**

F 16 H 13/00

Der vorliegende Recherchenbericht wurde für alle Patentansprüche erstellt

| Recherchenort | Abschlußdatum der Recherche | Prüfer |
|---|---|---|
| DEN HAAG | 13-02-1989 | FLORES E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................................................
& : Mitglied der gleichen Patentfamilie, übereinstimmendes Dokument

EPO FORM 1503 03.82 (P0403)